# EUROPÄISCHE PATENTSCHRIFT

(11) **EP 2 322 366 B1**
(45) Veröffentlichungstag und Bekanntmachung des Hinweises auf die Patenterteilung: **26.03.2014**
(21) Anmeldenummer: 10013906.2
(22) Anmeldetag: 23.10.2010
(51) Int. Cl.: B60G 21/055

(54) **Anordnung eines zweiteilig ausgeführten Stabilisators an einer Radaufhängung für ein Kraftfahrzeug**
Assembly for a two-part stabiliser for wheel suspension for a motor vehicle
Agencement d'un stabilisateur constitué de deux parties sur une suspension de roue pour un véhicule automobile

(30) Priorität: 13.11.2009 DE 102009052877
(43) Veröffentlichungstag der Anmeldung: 18.05.2011
(73) Patentinhaber: Audi AG, 85045 Ingolstadt (DE)
(72) Erfinder: Schindler, Andreas, 85055 Ingolstadt (DE); Ohletz, Armin, 85092 Kösching (DE); Beringer, Heinrich, 85095 Denkendorf (DE); Michel, Wilfried, 93339 Riedenburg (DE)
(74) Vertreter: Asch, Konrad

(56) Entgegenhaltungen:
- WO-A1-2007/091667
- DE-A1- 10 242 552
- DE-A1-102007 024 770
- US-A1- 2005 167 932

## Beschreibung

Die Erfindung betrifft eine Anordnung eines zweiteilig ausgeführten Stabilisators an einer Radaufhängung für ein Kraftfahrzeug, nach dem Oberbegriff des Patentanspruches 1.

Der Einsatz von zweigeteilten Stabilisatoren zum Beeinflussen der Federraten sowie der Fahreigenschaften von Kraftfahrzeugen ist grundsätzlich bekannt. Durch gegensinniges Verstellen der jeweiligen Stabilisatorteile kann das Wankverhalten bzw. die Kurvenneigung des Kraftfahrzeuges verringert oder durch gleichsinniges Verstellen einer Nickneigung zum Beispiel beim Bremsen entgegengewirkt werden.

Aus der DE 10 2007 007 214 A1 ist eine Anordnung eines solchen zweiteilig ausgeführten Stabilisators bekannt. Jedes der Stabilisatorteile weist zumindest einen Torsionsstab auf, der über einen Abtriebshebel an einem Radaufhängungselement, etwa einem Querlenker, angelenkt ist. Mit Hilfe einer Motor-/Getriebeeinheit können über den Torsionsstab sowie den Abtriebshebel Verstellkräfte auf das Radaufhängungselement übertragen werden.

Der im jeweiligen Stabilisatorteil verwendete Torsionsstab ist als hochbelastetes Bauteil mit einem Mindestdurchmesser auszulegen, um die hohen Drehmomente von der Motor-/Getriebeeinheit zum jeweiligen Radaufhängungselement zu übertragen. Andererseits ist es erforderlich, den Torsionsstab mit einer vorgegebenen wirksamen Mindest-Federlänge auszulegen, um eine hochfrequente Entkopplung zu erzielen, wodurch eine Übertragung von in den Torsionsstab eingebrachten hochfrequenten Schwingungen verhindert ist. Die wirksame Federlänge des Stabilisatorteiles entspricht der Länge eines Lastpfades, der sich vom Getriebeausgang der Motor-/Getriebeeinheit über den Torsionsstab bis zum Abtriebshebel erstreckt und mit dem ein Stellmoment auf das Radaufhängungselement übertragen werden kann.

Aus der DE 102 42 552 A1 ist eine gattungsgemäße Anordnung eines zweiteilig ausgeführten Stabilisators bekannt. Jedes Stabilisatorteil weist zumindest einen Torsionsstab auf, der über einen Abtriebshebel an einem Radaufhängungselement angelenkt ist und mittels einer Motor-/Getriebeeinheit verdrehbar ist. Zwischen dem Getriebe der Motor-/Getriebeeinheit und dem Torsionsstab ist eine Getriebestufe geschaltet, die eine axialparallele Anordnung der Motor-/Getriebeeinheit und des Torsionsstabes ermöglicht.

Die Aufgabe der Erfindung besteht darin, eine Anordnung eines zweiteilig ausgeführten Stabilisators an einer Radaufhängung eines Kraftfahrzeugs bereitzustellen, in der bei geringem Bauraum eine ausreichend große wirksame Federlänge des Stabilisatorteiles erzielt werden kann.

Die Aufgabe ist durch die Merkmale des Patentanspruches 1 gelöst. Bevorzugte Weiterbildungen der Erfindung sind in den Unteransprüchen offenbart.

Gemäß Patentanspruche 1 ist zwischen dem Getriebe der Motor-/Getriebeeinheit und dem Torsionsstab eine zusätzliche Getriebestufe geschaltet. Durch diese zusätzliche Getriebestufe wird eine achsparallele Anordnung der Motor-/Getriebeeinheit und des Torsionsstabes ermöglicht. Mit der zusätzlichen Getriebestufe kann am Getriebeausgang der Motor-/Getriebeeinheit eine Kraftumlenkung erfolgen, bei der ein entlang des Torsionsstabes geführter Lastpfad um 180° in die entgegengesetzte Richtung umgelenkt werden kann. Dadurch kann die wirksame Federlänge des Stabilisatorteiles erhöht werden, ohne die Gesamt-Baulänge des Stabilisatorteiles zu vergrößern. Eine solche Vergrößerung der Gesamt-Baulänge des Stabilisatorteiles würde sich bei einer seriellen Anordnung der Motor-/Getriebeeinheit und des Torsionsstabes ergeben, bei der sich die wirksame Federlänge des Torsionsstabes und die Baulänge der Motor-/Getriebeeinheit aufaddieren. Bei einer solchen seriellen Anordnung setzt sich daher die Gesamt-Baulänge des Stabilisatorteiles aus der Länge des Torsionsstabes und der Länge der Motor-/Getriebeeinheit zusammen, während erfindungsgemäß die Torsionsstab-Länge die Gesamt-Baulänge des Stabilisatorteiles einnehmen kann.

Bevorzugt kann die zusätzliche Getriebestufe außerhalb eines Gehäuses der Motor-/Getriebeeinheit angeordnet sein. Die zusätzliche Getriebestufe kann dabei eine Stirnradstufe sein, die ein Abtriebszahnrad am Getriebeausgang der Motor-/Getriebeeinheit aufweist, das mit einem vom Torsionsstab getragenen Festzahnrad bzw. Festzahnradabschnitt kämmt.

Um Bauraum unmittelbar an der Radachse zu gewinnen, sind erfindungsgemäß die bauraumintensiven Motor-/Getriebeeinheiten beabstandet zur Radachse angeordnet. Vor diesem Hintergrund ist der Torsionsstab im Wesentlichen rechtwinklig zur Fahrzeugquerrichtung ausgerichtet. Der Torsionsstab verläuft in diesem Fall daher nicht in Querrichtung, sondern in der Fahrzeuglängsrichtung. Damit kann die bauraumintensive Motor-/Getriebeeinheit weiter weg von der Radachse gelagert werden. Die beiden Motor-/Getriebeeinheiten des Stabilisators können bauraumgünstig jeweils innerhalb der beiden längsverlaufenden Torsionsstäbe angeordnet sein. Insbesondere im Hinblick auf eine einfache aktive Einstellung des Wank- oder Nickverhaltens kann der längsverlaufende Torsionsstab achsparallel, insbesondere koaxial, zu einer Schwenkachse eines Schwenklagers angeordnet sein, das das Radaufhängungselement mit dem Fahrzeugaufbau verbindet.

Der zweiteilig ausgeführte Stabilisator kann in Fahrzeuglängsrichtung bevorzugt vor einer Radachse angeordnet sein. Gemäß einem weiteren Aspekt der Erfindung kann dabei die Motor-/Getriebeeinheit auch - in Abweichung zur oben genannten achsparallelen Anordnung - koaxial zum Torsionsstab angeordnet sein, wodurch sich eine serielle Anordnung von Motor-/Getriebeeinheit und Torsionsstab ergibt. Alternativ dazu kann der zweiteilig ausgeführte Stabilisator in der Fahrzeuglängsrichtung auch hinter der Radachse angeordnet sein. Die Erfindung ist darüberhinaus sowohl auf die Vorderachse als auch auf die Hinterachse des Kraftfahrzeuges anwendbar.

Nachfolgend sind mehrere Vergleichsbeispiele, die nicht von der Erfindung umfasst sind, und ein Ausführungsbeispiel der Erfindung anhand der beigefügten Figuren beschrieben.

Es zeigen:
- Fig. 1 und 2: ein nicht von der Erfindung umfasstes Vergleichsbeispiel eines Stabilisatorteiles an einer vorderen linken Radaufhängung, bei dem die Motor-/Getriebeeinheit und/oder Torsionsstab sequentiell angeordnet sind;
- Fig. 3a und 3b: ein nicht von der Erfindung umfasstes Vergleichsbeispiel einer achsparallelen Anordnung der Motor-/Getriebeeinheit und des Torsionsstabes;
- Fig. 4: ein nicht von der Erfindung umfasstes Vergleichsbeispiel mit Stabilisatorteilen mit achsparalleler Anordnung der Motor/Getriebeeinheit und des Torsionsstabes;
- Fig. 5: das Ausführungsbeispiel der Erfindung; sowie
- Fig. 6 und 7: jeweils nicht von der Erfindung umfasste Vergleichsbeispiele.

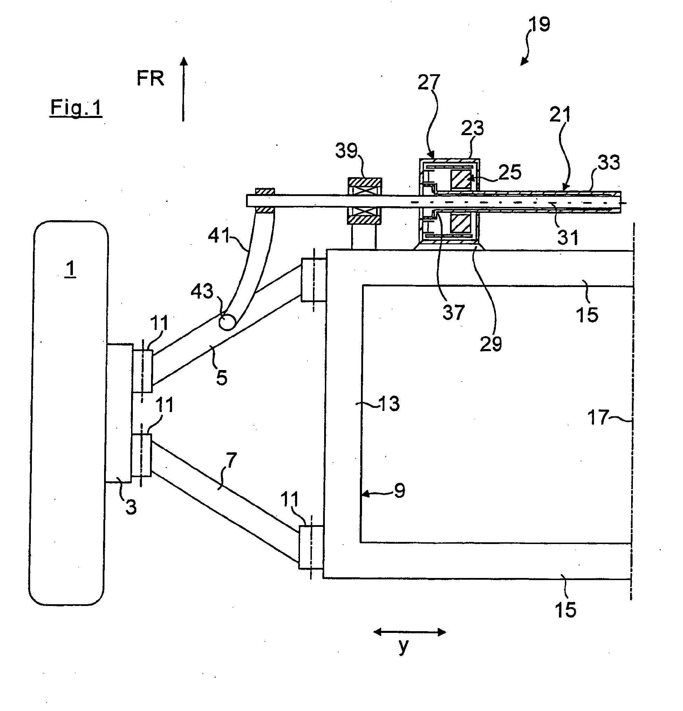

In der Fig. 1 ist grob schematisch eine vordere Radaufhängung für das linke Vorderrad 1 eines Kraftfahrzeuges gezeigt. Das Vorderrad 1 ist an einem Radträger 3 drehbar gelagert, der über einen vorderen und einen hinteren Querlenker 5, 7 aufbauseitig an einem Hilfsrahmen 9 angelenkt ist. Die Querlenker 5, 7 sind jeweils über Schwenklager 11 radseitig sowie aufbauseitig angebunden. Der Hilfsrahmen 9 weist zwei seitliche Längsträger 13 sowie zwei Querträger 15 auf und ist in nicht dargestellter Weise am Aufbau des Kraftfahrzeuges befestigt. Die in der Fig. 1 gezeigte Anordnung ist lediglich bis zur Fahrzeugmittelebene 17 dargestellt. Die rechte, hier nicht gezeigte Seite der Radaufhängung ist spiegelbildlich ausgeführt. Weitere Bauelemente der Radaufhängung, wie etwa obere Querlenker. Stoßdämpfer oder Tragfeder sind aus Gründen der Übersichtlichkeit nicht dargestellt. Ebenso sind Bauteile weggelassen, die die Lenkung der Vorderräder 1 betreffen.

Wie aus der Fig. 1 weiter hervorgeht, ist an dem vorderen Querträger 15 des Hilfsrahmens 9 ein zweiteilig ausgeführter Stabilisator 19 angeordnet, von dem in der Fig. 1 lediglich das linke Stabilisatorteil 21 gezeigt ist. Das Stabilisatorteil 21 ist hinsichtlich seiner Wirkung auf den vorderen Querlenker 5 mittels einer Motor-/Getriebeeinheit 23 verstellbar. Diese setzt sich aus einem Elektromotor 25 und einem Untersetzungsgetriebe 27 zusammen.

Das Untersetzungsgetriebe 27 und der Elektromotor 25 sind gemäß der Fig. 1 in einem gemeinsamen Gehäuse angeordnet, das über eine Lagerkonsole 29 am Hilfsrahmen 9 befestigt ist. Der Elektromotor 25 und das Untersetzungsgetriebe 27 sind dabei koaxial zu einem Torsionsstab 31 des Stabilisatorteiles 21 ausgerichtet. Der Torsionsstab 31 ist als ein Vollstab ausgeführt, dessen wirksame Federlänge mittels eines Hohlstabes 33 verlängert ist. Die beiden Torsionsstäbe 31, 33 sind aus Federstahl hergestellt und dementsprechend tordierbar. Dabei ist der Hohlstab 33 mit seinem getriebeseitigen Ende 37 trieblich mit dem Ausgang des Untersetzungsgetriebes 27 verbunden und verläuft diese durch den Elektromotor 25 hindurch bis nahe an die Fahrzeugmittelebene 17.

An seinem getriebefernen Ende ist der Hohlstab 33 über eine Keilverzahnung mit dem Vollstab 31 drehfest verbunden. Der Vollstab 31 verläuft nunmehr gegensinnig in Richtung der Fahrzeugaußenseite koaxial durch den Hohlstab 33 sowie durch den Elektromotor 25 und das Untersetzungsgetriebe 27. Der Vollstab 31 wird in Fahrzeugquerrichtung y weiter durch eine am Hilfsrahmen 9 befestigte Lagerstelle 39 geführt und weist an der Fahrzeugseite einen daran befestigten Abtriebshebel 41 auf. Der Abtriebshebel 41 ist über einen Anlenkpunkt 43 mit Koppelstange am unteren Querlenker 5 angelenkt. Bei Aktivierung der Motor-/Getriebeeinheit 23 kann daher eine Verstellkraft über den Anlenkpunkt 43 auf den unteren Lenker 5 übertragen werden.

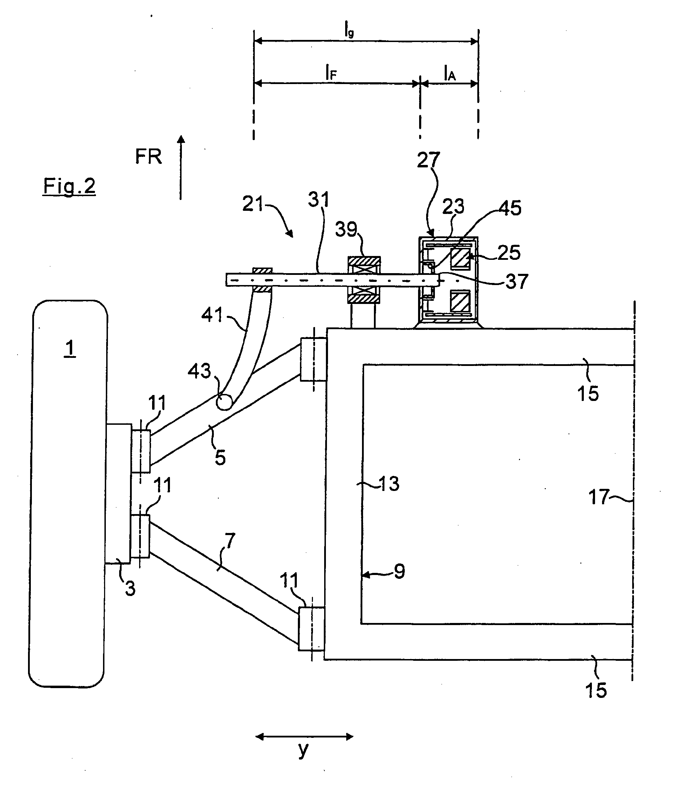

In der Fig. 2 ist eine weitere serielle Anordnung der Motor-/Getriebeeinheit 23 und des Torsionsstabes 31 gezeigt. Im Unterschied zur Fig. 1 ist dabei die wirksame Federlänge lediglich durch einen einzigen Torsionsstab 31 gebildet. Der Torsionsstab 31 trägt an seinem getriebeseitigen Ende 37 ein Hohlrad 45, das mit dem Untersetzungsgetriebe 27 trieblich verbunden ist. An seinem getriebefernen Ende ist der Vollstab 31 ebenfalls drehfest mit dem Abtriebshebel 41 in Verbindung, der über den Anlenkpunkt 43 am unteren Querlenker 5 angelenkt ist. Die gesamte Baulänge I_{g} des Stabilisatorteiles 21 setzt sich daher im Wesentlichen zusammen aus einer wirksamen Federlänge I_{F} und einer Axiallänge I_{A} der Motor-/Getriebeeinheit 23.

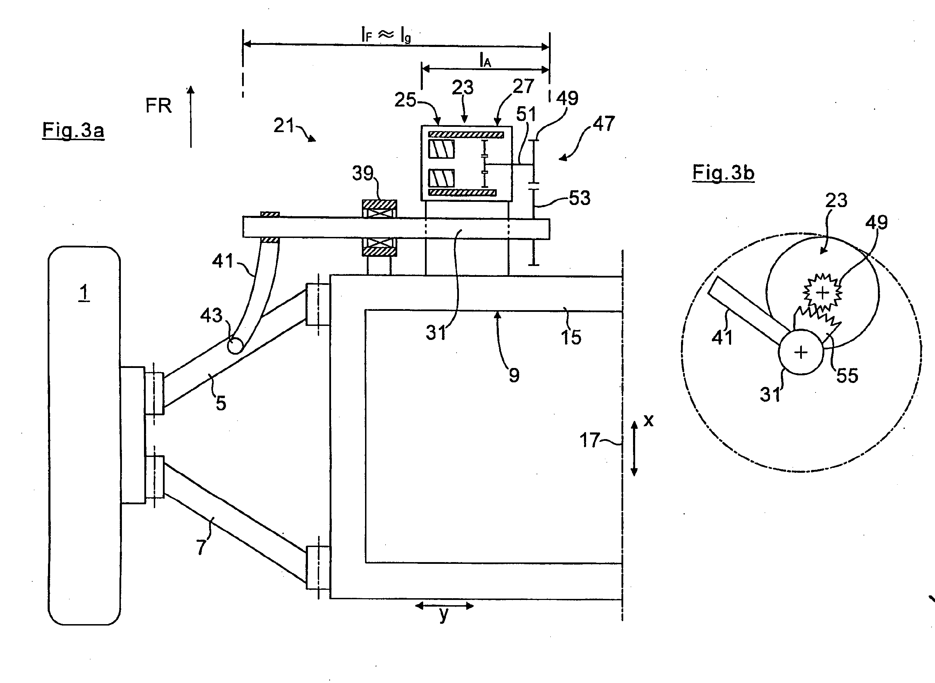

In den Fig. 3a und 3b ist im Unterschied zu den vorangegangenen Vergleichsbeispielen die Motor-/Getriebeeinheit 23 achsparallel zu dem Torsionsstab 31 angeordnet. Wie aus der Fig. 3a hervorgeht, ist die Motor-/Getriebeeinheit 23 dem zugehörigen Torsionsstab 31 in der Fahrzeuglängsrichtung x vorgelagert und über eine Lagerkonsole 29 am Hilfsrahmen 9 befestigt. Der Torsionsstab 31 verläuft daher zwischen der Motor-/Getriebeeinheit 23 und dem vorderen Querträger 15 des Hilfsrahmens 9 seitlich nach außen.

Das Untersetzungsgetriebe 27 der Motor-Getriebeeinheit ist gemäß der Fig. 3a nicht unmittelbar trieblich mit dem Torsionsstab 31 in Verbindung, sondern über eine zusätzliche Stirnradstufe 47. Mittels der Stirnradstufe 47 erfolgt im Lastpfad eine Kraftumlenkung um 180° auf den Torsionsstab 31, der zur Fahrzeugseite geführt ist. Die Stirnradstufe 47 ist außerhalb des Gehäuses der Motor-/Getriebeeinheit 23 angeordnet und weist ein Abtriebszahnrad 49 auf, das von einer Ausgangswelle 51 des Untersetzungsgetriebes 27 getragen ist. Das Abtriebszahnrad 49 ist in Eingriff mit einem vom Torsionsstab 31 getragenen Festzahnrad 53.

In der gezeigten achsparallelen Anordnung entspricht daher die wirksame Federlänge I_{F} des Torsionsstabes 31 im Wesentlichen der gesamten Baulänge I_{g} des Stabilisatorteiles 21. Das Stabilisatorteil 21 ist daher im Unterschied zu den Fig. 1 und 2 in der Fahrzeugquerrichtung y um die Baulänge I_{A} der Motor-/Getriebeeinheit 23 verlängert.

Wie aus der Fig. 3b hervorgeht, ist anstelle des Festzahnrades 53 lediglich ein Zahnradabschnitt 55 auf dem Torsionsstab 31 ausgebildet, der mit dem Abtriebszahnrad 49 des Untersetzungsgetriebes 27 kämmt. Der Zahnradabschnitt 55 ist dabei so ausgelegt, dass eine Verstellung des Torsionsstabes 31 um wenige Winkelgrade ohne weiteres durchführbar ist. In der Fig. 3b ist mit strichpunktierter Linie ein Umkreis angedeutet, innerhalb dem die Motor-/Getriebeeinheit 23 um den Torsionsstab 31 herum angeordnet werden kann. Die Winkellage der Motor-/Getriebeeinheit 23 richtet sich dabei nach den jeweiligen Bauraumerfordernissen.

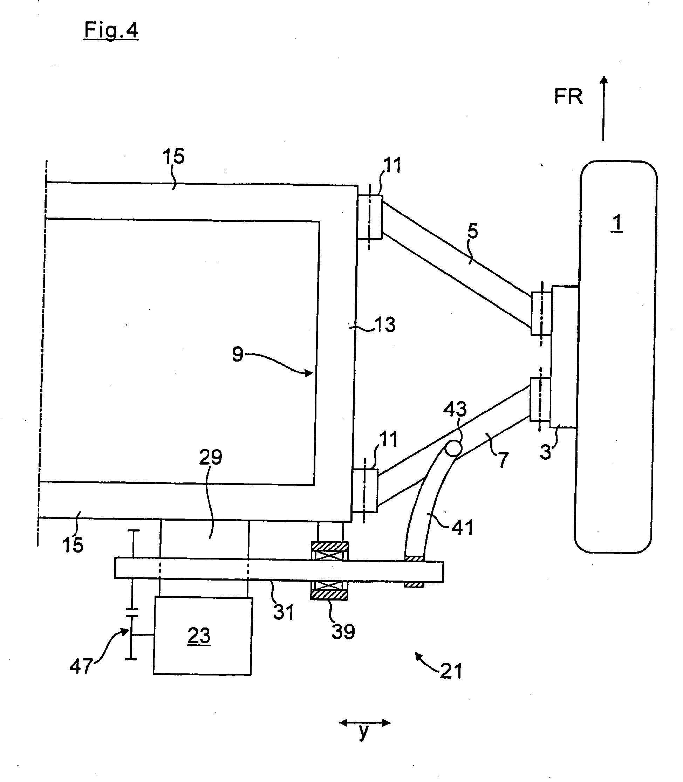

In der Fig. 4 ist in einem weiteren Vergleichsbeispiel ein Stabilisatorteil 21 gezeigt, der im Unterschied zu den vorangegangen Figuren in der Fahrzeuglängsrichtung x hinter dem Hilfsrahmen 9 vorgesehen ist. Entsprechend ist die Motor-/Getriebeeinheit 23 über die Lagerkonsole 29 an dem hinteren Querträger 15 des Hilfsrahmens 9 befestigt. Der Abtriebshebel 41 ist dabei über den Anlenkpunkt 43 am hinteren unteren Querlenker 7 angelenkt.

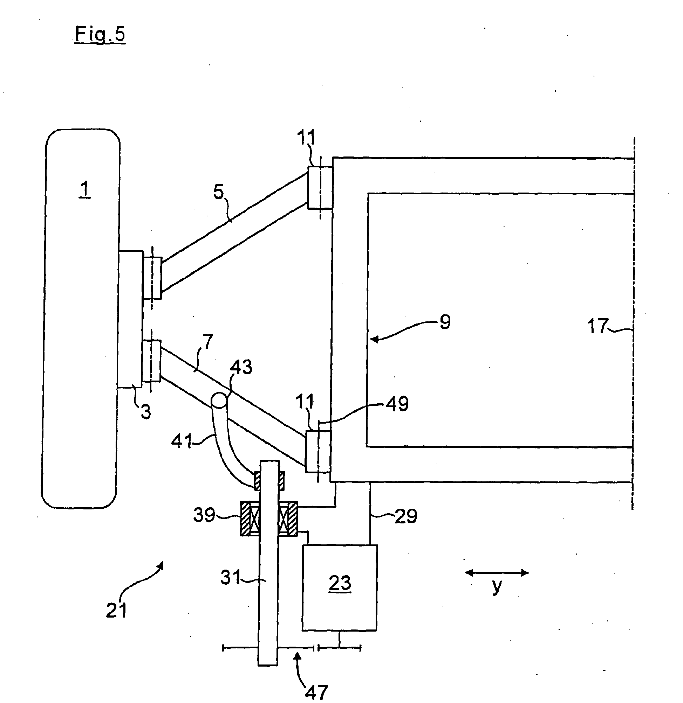

Im Unterschied zu den vorangegangenen Vergleichsbeispielen erstreckt sich in der Fig. 5 das Stabilisatorteil 21 mit seinem Torsionsstab 31 in der Fahrzeuglängsrichtung x. Das Stabilisatorteil 21 ist dabei in der Fahrzeug-längsrichtung hinter dem Hilfsrahmen 9 befestigt, während die beiden Motor-/Getriebeeinheiten 23 einander zugewandt in den jeweiligen Innenseiten der Torsionsstäbe 31 angeordnet sind.

Der Torsionsstab 31 ist gemäß der Fig. 5 achsparallel zu einer Schwenkachse 49 des Schwenklagers 11 angeordnet, wodurch das Lenkverhalten der Radaufhängung insgesamt begünstigt wird. Alternativ zum gezeigten Ausführungsbeispiel kann die Schwenkachse 49 auch koaxial zu dem Torsionsstab 31 ausgerichtet werden.

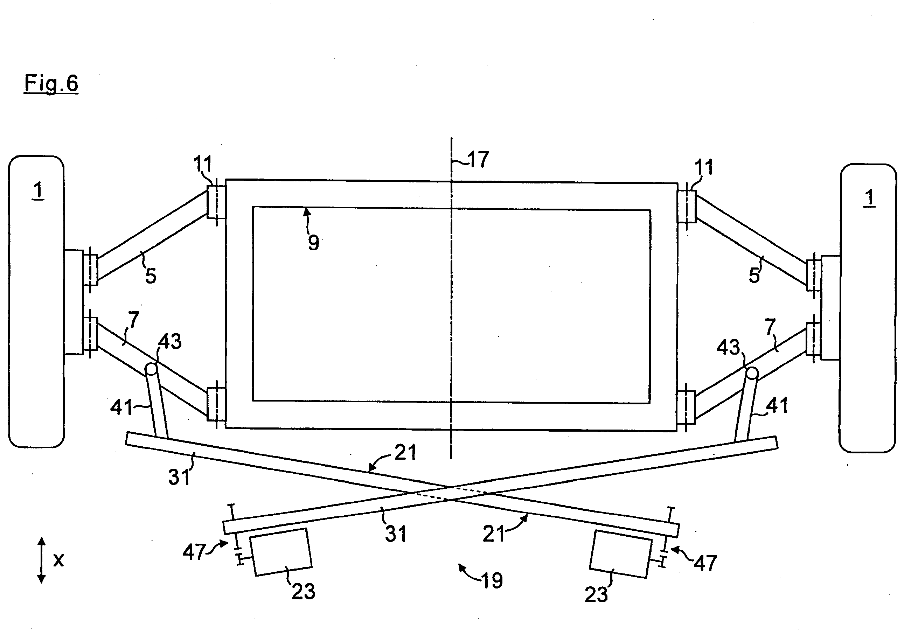

In der Fig. 6 sind die beiden Stabilisatorteile 21 in der Fahrzeuglängsrichtung x hinter dem Hilfsrahmen 9 angeordnet. Die Torsionsstäbe 31 der beiden Stabilisatorteile 21 überkreuzen sich dabei in etwa in der Fahrzeugmittelebene 17. Beide Torsionsstäbe 31 sind gemäß der Fig. 6 mit gleichem Schrägwinkel ausgehend von den jeweiligen Abtriebshebeln 41 zur Fahrzeugmitte hin nach hinten geneigt. Die Torsionsstäbe 31 sind dabei derart langgestreckt, dass mit Bezug auf die Fahrzeugmittelachse 17 der jeweilige Abtriebshebel 41 und die damit trieblich verbundene Motor-/Getriebeeinheit 23 jeweils auf gegenüberliegenden Fahrzeugseiten liegen.

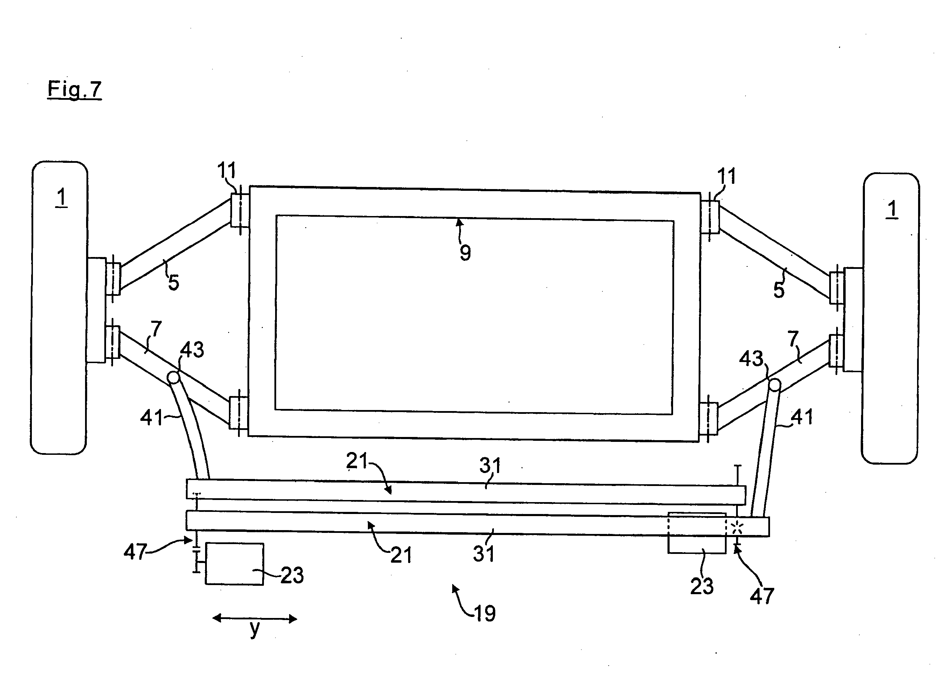

In der Fig. 7 ist ein weiteres Vergleichsbeispiel gezeigt, in dem die Stabilisatorteile 19 sich, wie in der Fig. 6, ebenfalls über nahezu die gesamte Fahrzeugbreite in Querrichtung y erstrecken. Im Unterschied zur Fig. 6 sind jedoch die beiden Torsionsstäbe 31 zueinander achsparallel in der Fahrzeugquerrichtung y ausgerichtet sowie über einen geringfügigen Spaltabstand voneinander beabstandet. Die beiden Motor-/Getriebeeinheiten 23 sind in unterschiedlichen Winkellagen mit den zugehörigen Torsionsstäben 31 gekoppelt, um insgesamt eine kompakte Anordnung des Stabilisators zu erzielen.

## Patentansprüche

1. Anordnung eines zweiteilig ausgeführten Stabilisators (19) an einer Radaufhängung für ein Kraftfahrzeug, wobei jedes Stabilisatorteil (21) zumindest einen Torsionsstab (31) aufweist, der über einen Abtriebshebel (41) an einem Radaufhängungselement (5, 7) angelenkt ist und mittels einer Motor-/Getriebeeinheit (23) verdrehbar ist, wobei zwischen dem Getriebe (27) der Motor-/Getriebeeinheit (23) und dem Torsionsstab (31) eine Getriebestufe (47) geschaltet ist, die eine achsparallele Anordnung der Motor-/Getriebeeinheit (23) und des Torsionsstabes (31) ermöglicht, **dadurch gekennzeichnet, dass** der Torsionsstab (31) im Wesentlichen rechtwinklig zur Fahrzeugquerrichtung (y) ausgerichtet ist.

2. Anordnung nach Anspruch 1, **dadurch gekennzeichnet, dass** die zwischen der Motor-/Getriebeeinheit (23) und dem Torsionsstab (31) geschaltete Getriebestufe (47) eine Stirnradstufe, ein Riementrieb, eine Gliederkette, ein Hebelgetriebe oder dergleichen ist.

3. Anordnung nach Anspruch 1 oder 2, **dadurch gekennzeichnet, dass** die Getriebestufe (47) ein am Getriebeausgang der Motor-/Getriebe-einheit (23) angeordnetes Abtriebszahnrad (49) aufweist, das mit einem am Torsionsstab (31) angeordneten Festzahnrad (53) beziehungsweise Festzahnradabschnitt (55) kämmt.

4. Anordnung nach Anspruch 1, 2 oder 3, **dadurch gekennzeichnet, dass** die Getriebestufen (47) der Motor-/Getriebeeinheit (23) der beiden Stabilisatorteile (21) einander zugewandt angeordnet sind.

5. Anordnung nach einem der vorhergehenden Ansprüche, **dadurch gekennzeichnet, dass** der Torsionsstab (31) außenseitig an der Motor-/Getriebeeinheit (23) vorbeigeführt ist.

6. Anordnung nach einem der vorhergehenden Ansprüche, **dadurch gekennzeichnet, dass** die Motor-/Getriebeeinheit (23) und der über den Torsionsstab (31) damit verbundene Abtriebshebel (41) mit Bezug auf eine Fahrzeugmittelachse (17) an gegenüberliegenden Fahrzeugseiten angeordnet ist.

7. Anordnung nach einem der vorhergehenden Ansprüche, **dadurch gekennzeichnet, dass** die Motor-/Getriebeeinheiten (23) jeweils innenseitig der beiden in Längsrichtung (x) verlaufenden Torsionsstäbe (31) angeordnet sind.

8. Anordnung nach einem der vorhergehenden Ansprüche, **dadurch gekennzeichnet, dass** das Radaufhängungselement (5, 7), an dem der Abtriebshebel (41) angelenkt ist, über ein Schwenklager (11) am Fahrzeugaufbau (9) gelagert ist, dessen Schwenkachse (49) achsparallel, insbesondere koaxial, zum Torsionsstab (31) ist.

9. Anordnung nach einem der vorhergehenden Ansprüche, **dadurch gekennzeichnet, dass** der zweiteilig ausgeführte Stabilisator (19) in Fahrzeuglängsrichtung (x) vor einer Radachse angeordnet ist, wobei die Motor-/Getriebeeinheit (23) in einer seriellen Anordnung koaxial zum Torsionsstab (31) angeordnet sind.

## Claims

1. Arrangement of a two-part stabiliser (19) on a wheel suspension for a motor vehicle, each stabiliser part (21) comprising at least one torsion bar (31) which is articulated on a wheel suspension element (5, 7) via a power take-off lever (41) and is rotatable by means of an engine/transmission unit (23), a gear stage (47) being connected between the transmission (27) of the engine/transmission unit (23) and the torsion bar (31), enabling a paraxial arrangement of the engine/transmission unit (23) and the torsion bar (31), **characterised in that** the torsion bar (31) is aligned substantially at right angles to the transverse direction (y) of the vehicle.

2. Arrangement according to claim 1, **characterised in that** the gear stage (23) connected between the engine/transmission unit (23) and the torsion bar (31) is a spur gear stage, a belt transmission, a link chain, a lever gear or the like.

3. Arrangement according to claim 1 or 2, **characterised in that** the gear stage (47) comprises a power take-off sprocket (49) arranged at the transmission output of the engine/transmission unit (23), which meshes with a fixed sprocket (53) or fixed sprocket section (55) arranged on the torsion bar (31).

4. Arrangement according to claim 1, 2 or 3, **characterised in that** the gear stages (47) of the engine/transmission unit (23) of the two stabiliser parts (21) are arranged facing each other.

5. Arrangement according to one of the preceding claims, **characterised in that** the torsion bar (31) is guided past the outside of the engine/transmission unit (23).

6. Arrangement according to one of the preceding claims, **characterised in that** the engine/transmission unit (23) and the power take-off lever (41) connected thereto via the torsion bar (31) are arranged on opposite sides of the vehicle, in relation to a central longitudinal axis (17) of the vehicle.

7. Arrangement according to one of the preceding claims, **characterised in that** the engine/transmission units (23) are each arranged on the inside of the two torsion bars (31) extending in the longitudinal direction (x).

8. Arrangement according to one of the preceding claims, **characterised in that** the wheel suspension element (5, 7) on which the power take-off lever (41) is articulated is mounted by means of a swivel bearing (11) on the vehicle structure (9), the swivel axis (49) of which is paraxial, particularly coaxial, to the torsion bar (31).

9. Arrangement according to one of the preceding claims, **characterised in that** the two-part stabiliser (19) is arranged in front of a wheel axis in the longitudinal direction (x) of the vehicle, the engine/transmission unit (23) being arranged in a serial arrangement coaxially with the torsion bar (31).

## Revendications

1. Aménagement d'un stabilisateur (19) formé de deux parties sur une suspension de roue pour un véhicule automobile, dans lequel chaque partie de stabilisateur (21) présente au moins une barre de torsion (31), qui est articulée via un levier d'entraînement (41) sur un élément de suspension de roue (5, 7) et peut tourner au moyen d'une unité de motorisation/transmission (23), dans lequel est commuté entre la transmission (27) de l'unité de motorisation/transmission (23) et la barre de torsion (31) un étage de transmission (47) qui permet un aménagement à axes parallèles de l'unité de motorisation/- transmission (23) et de la barre de torsion (31), **caractérisé en ce que** la barre de torsion (31) est alignée sensiblement à angle droit avec la direction transversale (y) du véhicule.

2. Aménagement selon la revendication 1, **caractérisé en ce que** l'étage de transmission (47) commuté entre l'unité de motorisation/transmission (23) et la barre de torsion (31) est un étage à pignon droit, un entraînement à courroie, une chaîne à maillons, une transmission à levier ou similaire.

3. Aménagement selon la revendication 1 ou la revendication 2, **caractérisé en ce que** l'étage de transmission (47) présente une roue dentée d'entraînement (49) aménagée sur la sortie de transmission de l'unité de motorisation/- transmission (23), laquelle roue dentée s'engrène sur la roue dentée fixe (53) aménagée sur la barre de torsion (31), éventuellement sur la section (55) de la roue dentée fixe.

4. Aménagement selon la revendication 1, 2 ou 3, **caractérisé en ce que** les étages de, transmission (47) de l'unité de motorisation/- transmission (23) des deux parties de stabilisateur (21) sont disposés tournés l'un vers l'autre.

5. Aménagement selon l'une quelconque des revendications précédentes, **caractérisé en ce que** la barre de torsion (31) passe extérieurement devant l'unité de motorisation/transmission (23).

6. Aménagement selon l'une quelconque des revendications précédentes, **caractérisé en ce que** l'unité de motorisation/transmission (23) et le levier d'entraînement (41) qui lui est donc relié via la barre de torsion (31) sont aménagés sur les côtés opposés du véhicule par rapport à un axe central (17) du véhicule.

7. Aménagement selon l'une quelconque des revendications précédentes, **caractérisé en ce que** les unités de motorisation/transmission (23) sont aménagées respectivement à l'intérieur des deux barres de torsion (31) s'étendant dans la direction longitudinale (x).

8. Aménagement selon l'une quelconque des revendications précédentes, **caractérisé en ce que** l'élément de suspension de roue (5, 7), sur lequel le levier d'entraînement (41) est articulé, est monté via un palier pivotant (11) sur la carrosserie (9) du véhicule, dont l'axe pivot (49) a un axe parallèle, en particulier coaxial avec la barre de torsion (31).

9. Aménagement selon l'une quelconque des revendications précédentes, **caractérisé en ce que** le stabilisateur (19) formé de deux parties est aménagé dans la direction longitudinale (x) du véhicule devant un essieu de roues, dans lequel l'unité de motorisation/transmission (23) est aménagé dans un arrangement sériel coaxialement avec la barre de torsion (31).
